Europäisches Patentamt

European Patent Office

Office européen des brevets

(19)

(11) Publication number: **0 109 832**
A2

(12) **EUROPEAN PATENT APPLICATION**

(21) Application number: 83307014.7

(22) Date of filing: 16.11.83

(51) Int. Cl.³: **G 09 F 9/33**
G 02 F 1/015, H 01 J 17/49

(30) Priority: 22.11.82 JP 205041/82

(43) Date of publication of application:
30.05.84 Bulletin 84/22

(84) Designated Contracting States:
DE FR GB NL

(71) Applicant: TOKYO SHIBAURA DENKI KABUSHIKI
KAISHA
72, Horikawa-cho Saiwai-ku
Kawasaki-shi Kanagawa-ken 210(JP)

(72) Inventor: Oana, Yasuhisa c/o Patent Division
Tokyo Shibaura Denki K.K. 72 Horikawa-cho
Saiwai-ku Kawasaki-shi Kanagawa-ken(JP)

(74) Representative: Batchellor, John Robert et al,
BATCHELLOR, KIRK & EYLES 2 Pear Tree Court
Farringdon Road
London EC1R 0DS(GB)

(54) Panel display.

(57) A panel display consists of a matrix of picture elements each of which includes with image forming means, e.g. a liquid crystal display element, an electroluminescent display element, a plasma display element or an electrochromic display element, and light sensing means (5) which may be a photoconductor, a photo-diode or a phototransistor. The light sensing means of the picture elements constitute an output signal matrix, by which any picture element illuminated by a light emitting light-pen may be readily identified. If required, information stored in the located picture element may be revised.

EP 0 109 832 A2

FIG.I.

## Panel Display

This invention relates to a panel display having a matrix of picture elements each of which includes a liquid crystal display element, an electroluminescent display element, a plasma display element or an electrochromic display element, and more particularly to such a display panel, in which any arbitrary picture element may be located by the use of a light emitting light-pen.

Panel displays are known in the prior art, in which the picture frame consists of a matrix of picture elements each of which changes its transmittance or reflectance or its emitting light intensity depending on electric voltage applied thereto, e.g. a liquid crystal display element, an electroluminescent display element, a plasma display element, and an electrochromic display element. Two independent systems are available in the prior art for addressing each picture element of such a panel display. Thus, panel displays may be classified into two types, following the addressing system employed. One is the direct drive matrix system and the other is the active matrix system. The former has an advantage that it employs a rather simple structure, but is accompanied by a disadvantage that the number of picture elements is limited, because this system is based on a cumulative response system, wherein the larger the number of picture elements the worse are the contrast and the response characteristics. The active matrix system was developed to remove the above disadvantage, each of the picture elements being provided with a switching element which functions as a signal input interface and with a signal storage means e.g. a capacitor which functions to prolong the length of time during which a signal is inputted to the respective picture element.

Identification of an arbitrary picture element of a matrix type panel display is readily practicable in the

2  0109832

prior art by specifying the address numbers of the picture element in a digital manner. However, a system in which an operator can locate an arbitrary picture element or picture elements in an analogue manner would be effective to improve the mutual communication between operator and panel display.

Such an improved system is practicable in the prior art by utilisation of a light receiving type light-pen, provided the panel display is capable of identifying a picture element which is receiving an input signal at any arbitrary instant, as is in the case of a panel display employing a CRT tube. In other words, provided a light receiving type light-pen can identify a time at which an arbitrary picture element is receiving an input signal, it is practicable to identify the address number of the picture element to which the light-pen is directed, by utilising the clock which is inherently provided for the regulation of the matrix type display panel, i.e. a synchronisation signal.

Hence, however, (1) a wire connecting a light receiving light-pen and a regulation module of the panel display is essential, and (2) it is essential that a light signal which is received by the light receiving type light-pen and which allows identification of the location from which the light signal is emitted, is available. In other words, it is essential that a specific picture element should emit light which is differentiated from those which are emitted by the other picture elements, at a predetermined time. Thus, the function of this means is not necessarily satisfactory, if it is applied to a matrix type panel display in which the input signal is not instantaneous but prolonged, as is in the case of active matrix system. Therefore, the application of this means is practically limited to matrix type panel displays of which the input signals are instantaneous, as is in the case of the panel display employing a CRT tube.

From the above, it will be apparent that it is desirable to develop a panel display in which an arbitrary picture element thereof can be located with a light-pen which is not necessarily connected by wire, in an analogue manner, such panel display being allowed to employ any type of addressing system including not only systems wherein the input signals are instantaneous so that it is practicable to identify a picture element by identifying the time at which one of the instantaneous signals is input but also systems wherein the input signals are not instantaneous but prolonged so that it is not easy to identify a picture element by identifying the time at which one of the prolonged signals is initiated.

The invention thus relates to a panel display comprising a matrix of picture elements, each of which comprises an image forming means which changes the transmittance or reflectance thereof or the light intensity emitted thereby in response to application of electric voltage thereto, and which includes a transparent common electrode and a display electrode, a plurality of address lines and a plurality of data lines for supplying input signals to each picture element; and is characterised in that each picture element further comprises light sensing means and in the provision of a plurality of address output lines and a plurality of data output lines operatively connected to the light sensing means of the matrix, for outputting element-identifying signals on receipt of light by a light sensing means.

The light sensing means are preferably a photoconductor, a photo-diode or a phototransistor, each of which can be made of amorphous silicon, zinc sulphide, cadmium selenium, zinc selenium, cadmium sulphide, for example.

Preferred examples of the image forming means are a liquid crystal display element, an electroluminescent display element, a plasma display element and an

electrochromic display element. Except for a plasma display element, all of these image forming means are solid-state elements. All the image forming means including a plasma display element may be produced by thin layer technology.

No limitation is imposed on the addressing systems which are employed for any of the foregoing panel display systems. In other words, either the direct drive matrix system or the active matrix system can be used.

No limitation is imposed to either the location on which the light sensing means are arranged or the system with which the light sensing means are produced. In other words, the light sensing means which are employed for any of the foregoing panel display systems can be arranged on either a bulk silicon layer or a transparent common electrode. Further, the TFT (thin film transistor) system can be used to produce any of the foregoing panel display systems.

The panel display may additionally be provided with means to remove a signal stored in the picture element and to input another signal to said picture element. Any of the prior art means employable for revision of information stored in a panel display can be employed as additional means for that purpose.

The invention will be more readily understood by way of example from the following description of matrix panel displays in accordance therewith, reference being made to the accompanying drawings, in which:

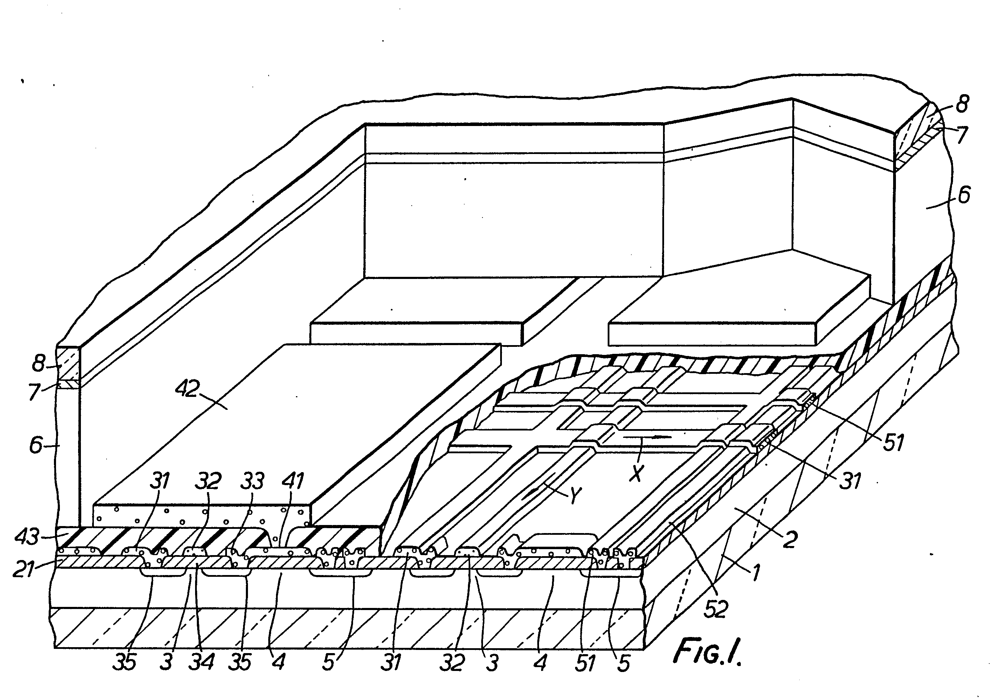

Figure 1 is partly cut-away overall perspective view of a first form of active matrix type panel display in accordance with the invention, the panel display having a matrix consisting of picture elements each of which consists of an image forming means exemplified by a liquid crystal display element, a switching element exemplified by a field effect transistor (hereinafter referred to as an FET) arranged on a bulk silicon layer, a signal storage means exemplified by a capacitor arranged on a bulk silicon layer, and a light sensing means exemplified by a photoconductor of a $P^+$ type single crystalline silicon layer,

Figure 2 is a cross-sectional view on enlarged scale of one picture element of the panel display of Figure 1,

Figure 3 is a cross-sectional view of one end of the panel display of Figure 1,

Figure 4 is a schematic wiring diagram of an active matrix type panel display,

Figure 5 is a cross-sectional view of one picture element of a second form of active matrix type panel display in accordance with the invention, employing as the light sensing means of each picture element a photoconductor of a $P^-$ type amorphous silicon layer,

Figure 6 is a cross-sectional view of one end of a third form of active matrix type panel display in accordance with the invention, employing as the signal storage means a capacitor produced by the TFT system, and as the light sensing means a photoconductor produced by the TFT system,

Figure 7 is a schematic wiring diagram of an active matrix type panel display which may be used in place of that of Figure 4,

Figure 8 is a partly cut-away overall perspective view of a further form of direct drive matrix type panel display, the panel display having a matrix consisting of picture elements each of which consists of an image forming means in the form of an electroluminescent display element, and a light sensing means in the form of a photoconductor of an amorphous silicon layer arranged on a glass plate, and

Figure 9 is a cross-sectional view of one picture element of the panel display of Figure 8.

Figures 1, 2, 3 and 4 illustrate the layer configuration, the wiring or matrix arrangement, and the function of an active matrix type panel display, having a matrix consisting of picture elements each of which consists of an image forming means in the form of a liquid crystal display element, a switching element in the form of a field effect transistor (hereinafter referred to as an FET) produced on the upper surface of a bulk silicon (hereinafter referred to as an Si) layer, a signal storage means in the form of a capacitor produced in the neighbourhood of the FET on the upper surface of the bulk Si layer, and a light sensing means in the form of a photoconductor of a $P^+$ type single crystalline Si layer produced on the upper surface of the bulk Si layer.

A switching FET 3 and a signal storage capacitor 4 are arranged along a limited area of the upper surface of an n-type single crystalline Si substrate 2 which is placed on a glass plate 1. This FET 3 is provided with $P^+$ type source and drain regions 35 produced on the upper surface of the n-Si substrate 2 by diffusion, a gate insulator layer 34 of $SiO_2$ arranged to bridge the source and drain regions 35, and a field insulator layer 21 of $SiO_2$. An Al drain electrode 31 of the FET 3 extends in the X direction to constitute one of the data lines (X). A polycrystalline Si gate electrode 32 of the FET 3 extends in the Y direction to constitute one of the address lines (Y).

The signal storage capacitor 4 has one electrode which is an Al film 41 forming an extension of Al source electrode 33, a dielectric layer formed by the field $SiO_2$ layer 21, and a second electrode formed by an $n^+$ region 22 (Figure 2) produced along the upper surface of the n-Si substrate 2 by diffusion. A Pt display electrode 42 which is connected as shown with one electrode 41 of the signal storage capacitor 4 extends along a polyimide resin insulator layer 43 which separates the Pt display electrode 42 from the n-Si substrate 2. The bottom surface of the Pt display electrode 42 is lined by a Ti layer 42' (Figure 2).

The light sensing means 5 (a photoconductor in this example) is arranged along a limited part of the upper surface of the n-Si substrate 2, at a position not overlaid by the Pt display electrode 42. Although the light sensing means 5 is covered by the field $SiO_2$ layer 21 and the polyimide resin insulator layer 43, it is capable of receiving sufficient light, because those materials are transparent or at least translucent. One end of each light sensing means 5 is connected with a data output terminal 51 extending in the X direction and the other end with an address output terminal 52 extending in the Y direction.

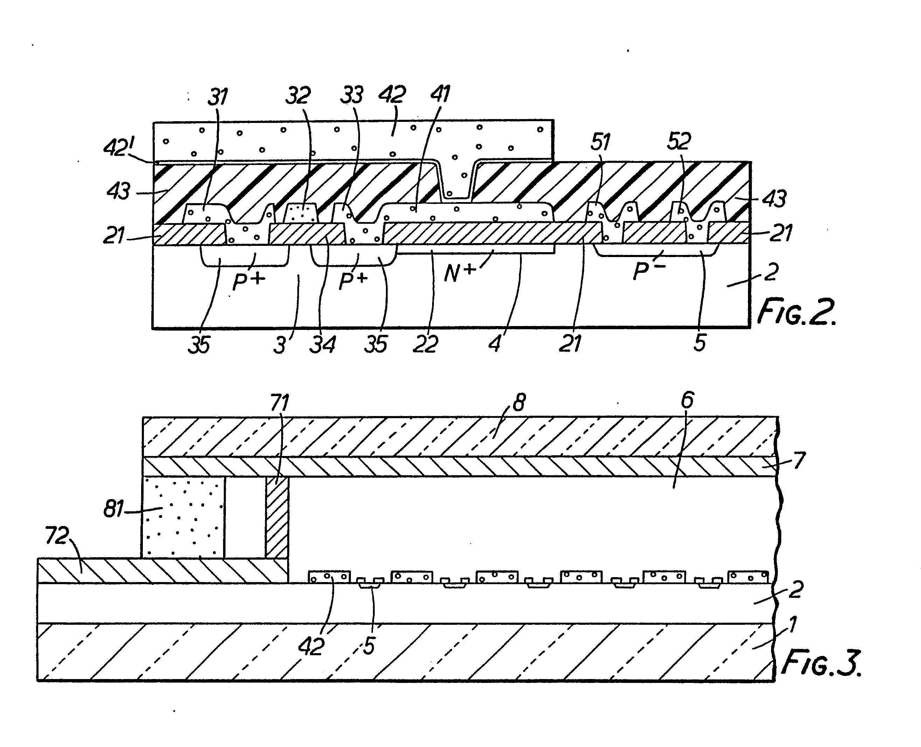

A transparent common electrode 7, which is produced predominantly from an indium-tin-oxide (hereinafter referred to as an ITO) and which is common to all the liquid crystal display elements of the matrix, and a glass plate 8 which is aligned with the common electrode are supported by a spacer 81 (Figure 3), to leave a space to be filled with a liquid crystal. A conductive paste film 71 connects the common electrode 7 with a common electrode lead wire 72. A treatment which is effective to cause liquid crystal particles to take the same direction under the application of voltage, is applied to the common electrode 7, before the space is filled with a liquid crystal 6.

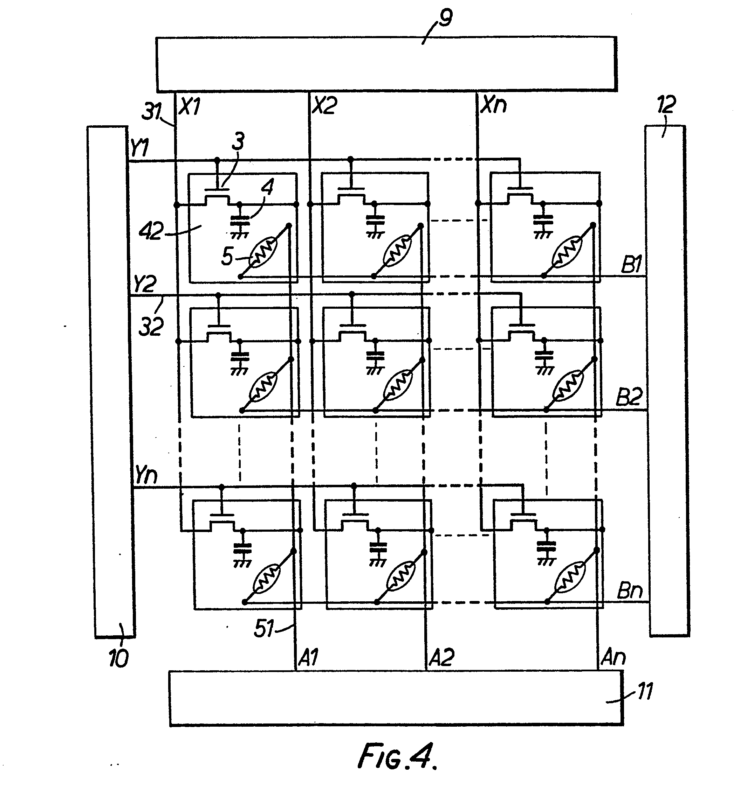

Referring to Figure 4, each picture element is provided with switching FET 3, signal storage capacitor 4 and light sensing means 5 (a photoconductor in this example). The drain electrodes of all the FETs 3 belonging to the same column are connected to one of the data lines (X) 31, one of which is provided for each column. The data lines (X) 31 are driven by a data driver 9. The gate electrodes of all the FETs 3 belonging to the same row are connected to one of the address lines (Y) 32, one of which is provided for each row. The address lines (Y) 32 are driven by an address driver 10. The data output terminals 51 of all the light sensing means 5 belonging to the same column are connected to one of the data output lines (A) 51', one of which is provided for each column. The data output lines (A) 51' output the information picked up thereby to a data output scanner 11. The address output terminals 52 of all the light sensing means 5 of the same row are connected to one of the address output lines (B) 52', one of which is provided for each row. The address output lines (B) 52' output the information picked up thereby to an address output scanner 12.

When the light sensing means 5 of an arbitrary picture element receives light from a light-emitting light-pen (not shown), the aforementioned light sensing means 5 changes its resistance. Thus, the address number of the aforementioned picture element can be detected by the data output scanner 11 and the address output scanner 12, enabling the foregoing arbitrary picture element to be located.

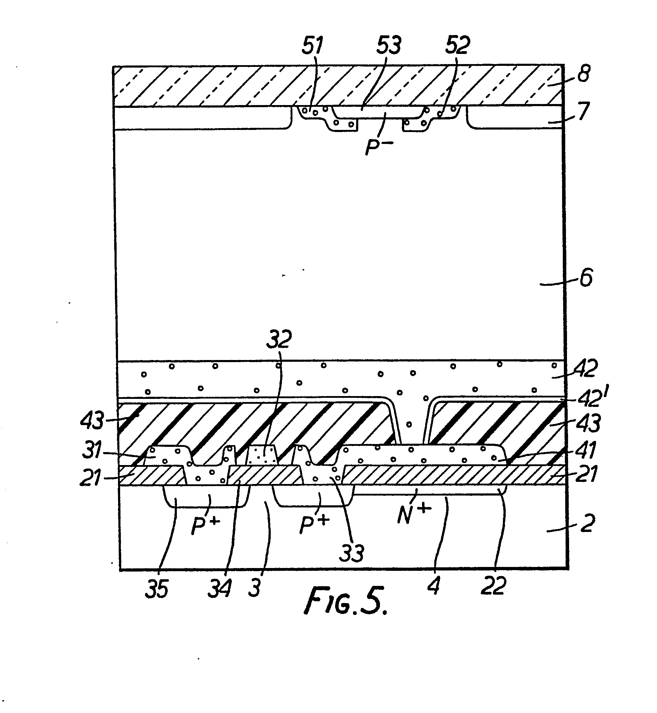

The active matrix type display panel of Figure 5 is similar that of Figures 1 to 3, except that the light sensing means is a $P^-$ amorphous Si photoconductor arranged on a limited area of the opposite glass plate 7.

In the embodiment of Figure 5, the transparent common electrode 7 covers the major area of the lower surface of an opposite glass plate 8, leaving a limited area on plate 8 on which a $P^-$ type amorphous Si layer 53 is arranged to function as the light sensing means or photoconductor. One end of the light sensing means 53 is connected with a data output terminal 51 extending in the X direction, and the other end is connected with an address output terminal 52 extending in the Y direction. The data output terminals 51 of all the light sensing means 53 of the same column are connected to one of the data output lines (A). The address output terminals 52 of all the light sensing means 53 belonging to the same row are connected to one of the address output lines (B) as before.

Provided the light sensing means 53 of an arbitrary picture element receives the light of a light emitting light-pen (not shown), the aforementioned light sensing means 53 changes its resistance. Thus, the arbitrary picture element is readily located as before.

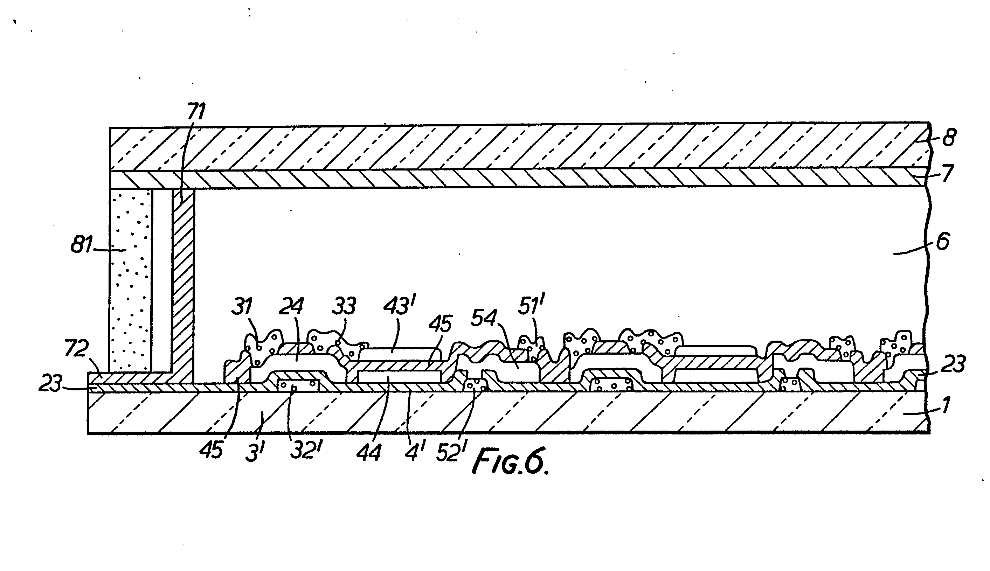

In the panel display of Figure 6, the FET functioning as the switching means, the capacitor which functions as a signal storage means and the photoconductor which functions as a light sensing means of each picture element are produced by employing the TFT (thin film transistor) system.

In Figure 6 the FET, the capacitor and the light sensing means (a photoconductor in this example) of a display element are indicated respectively at 3', 4' and 54 and are produced by the TFT system on the glass plate 1. An Al gate-electrode 32' and an Al address output terminal 52' are arranged on limited areas of a glass plate 1. The Al gate electrode 32' extends in the Y direction and functions also as an address line (not shown). The address output terminal 52' extends in the X direction and functions also as an address output line (not shown). $SiO_2$ layer 23 is arranged to cover entirely the glass plate 1, except for a part of the address output terminal 52'. An amorphous Si layer 24 is arranged selectively over the gate electrode 32' and an area adjacent thereto. This amorphous Si layer 24 functions as a channel of the FET 3'. Photoconductor 54 is constituted by an amorphous Si layer which is arranged on the $SiO_2$ layer 23 and which at one end contacts the address output terminal 52'. On the area adjacent to the FET 3', one electrode 44 of the signal storage capacitor 4' is produced employing a transparent conductor e.g. ITO. $SiO_2$ layer 45 functions as the insulator layer of the FET 3', the dielectric layer of the capacitor 4' and the field insulator layer. An Al drain electrode 31 of the FET 3' is connected to one of the data lines (X) extending in the X direction.

An Al source electrode 33 of the FET 3' is connected to the other terminal 43' of the capacitor 4'. This other terminal 43' is produced of a transparent conductor and functions also as a display electrode. An Al data output terminal 51' which is connected with the other end of the photoconductor 54, is connected to one of the data output lines (not shown) extending in the Y direction. Liquid crystal 6 is filled in the space produced between the aforementioned devices including the display electrode 43' and a transparent common electrode 7 plated along the bottom surface of an opposite glass plate 8 supported by spacer 81. The transparent common electrode 7 is connected to a common electrode lead wire 72 by a conductive paste film 71, as before.

Provided the light sensing means 54 (a photoconductor in this example) of an arbitrary picture element receives the light of a light emitting light-pen (not shown), the aforementioned light sensing means 54 changes its resistance to enable the arbitrary picture element to be readily located.

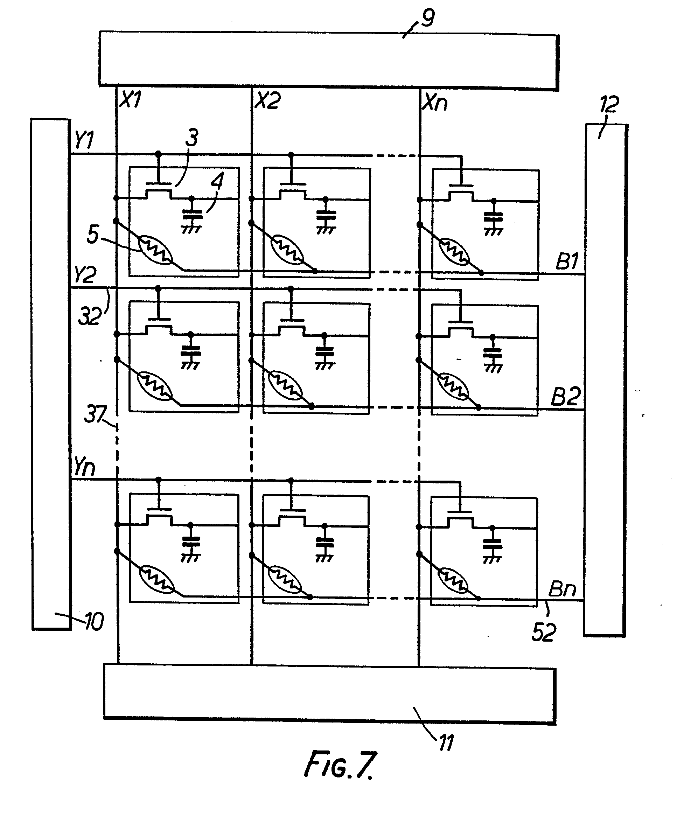

In Figure 7, each picture element is again provided with a switching FET 3, a signal storage capacitor 4 and a light sensing means e.g. a photoconductor 5. The drains of all the switching FETs 3 are driven by a data driver 9, and the gates of all the switching FETs 3 are driven by an address driver 10. The output of the light sensing means 5 is supplied to a data output scanner 11 and an address output scanner 12. The major difference between the system of Figure 7 and that of Figure 4 is that, for each column of display elements, a common line is provided to act as both the data line and data output line. In other words, not only the drains of all the FETs 3 but also the data output terminals of all the light sensing means 5 belonging to the same column are connected in common to one data input and data output lines (X) 37, one of which is arranged for each column and which extend in the X direction.   As is in the case of Figure 4, the gate electrodes of all the FETs 3 belonging to the same row of display elements are connected to one of the address lines (Y) 32, one of which is provided for each row and which extend in the Y direction, and the address output terminals of all the light sensing means 5 belonging to the same row are connected to one of the address output lines (B) 52, one of which is arranged for each line and which extend in the Y direction.

Since the data input and data output line (X) 37 perform two independent functions, the wiring is simplified.

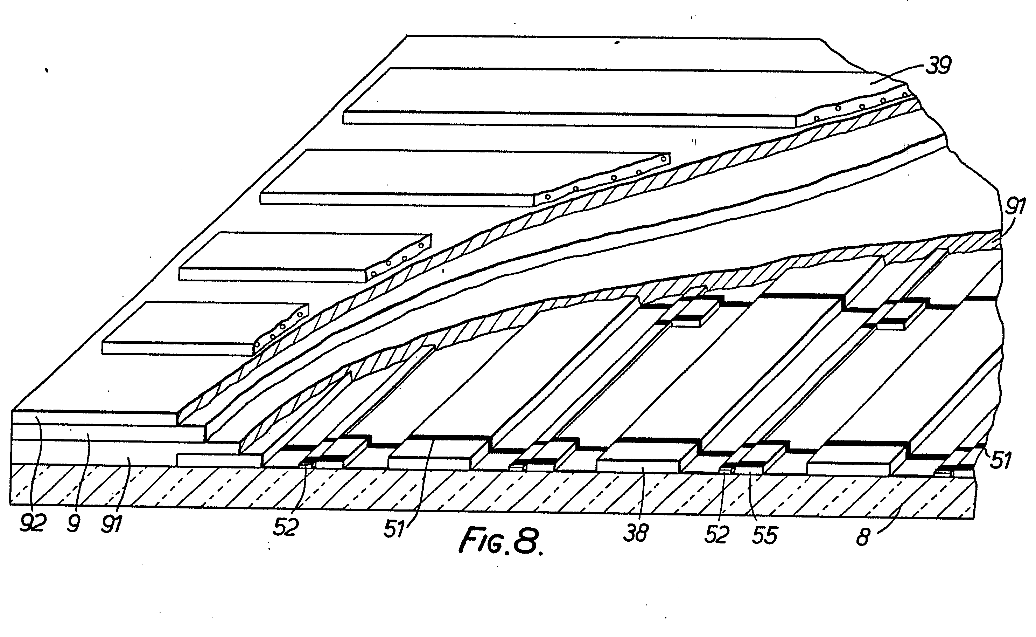

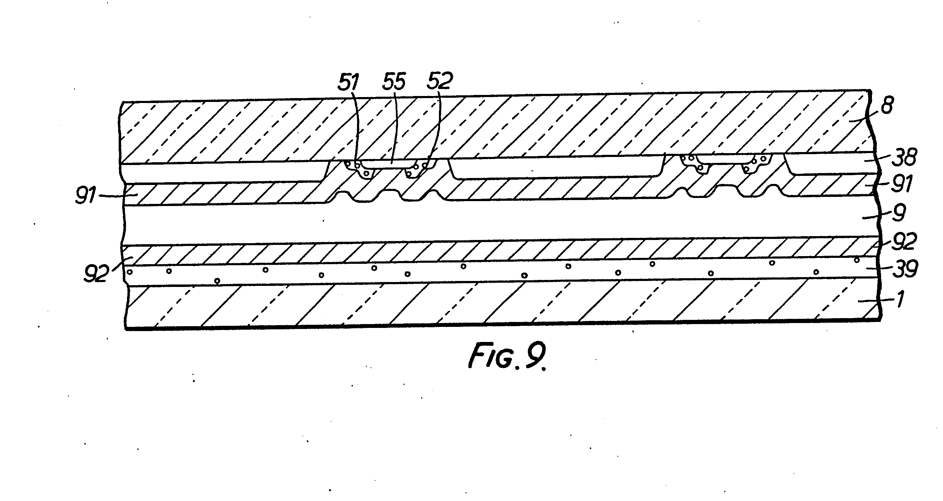

In the embodiment of Figures 8 and 9 the image forming means of each picture element is constituted by an electroluminescent display element and the light sensing means is a photoconductor formed by an amorphous Si layer on a glass plate.

An amorphous Si photoconductor 55 is arranged on a limited area of a glass substrate 8.   The ends of the photoconductor 55 are connected respectively to data output line 51 and address output line 52 which extend to directions crossing with each other at right angles.   A plurality of parallel address lines 38 made of a transparent conductor e.g. ITO are arranged on glass substrate 8.   An electroluminescent layer 9 of Mn doped ZnS is arranged on an insulator layer 91 of $Si_3N_4$ produced on the transparent electrodes 38 and the light sensing means 55.   A plurality of parallel data lines or opposite electrodes 39 are arranged on an insulator layer 92 of for example $Si_3N_4$, of $Al_2O_3$ and overlie electroluminescent layer 9.   The data lines or opposite electrodes 39 are at right angles to the address lines 38.   The data lines or opposite electrodes 39 are protected by glass plate 1.

As with previous examples, when the light sensing means 55 of an arbitrary picture element receives light from a light emitting light-pen (not shown), the light sensing means 55 of that element changes its reistance, allowing the arbitrary picture element to be readily located.

The light sensing means employed in the panel displays may be a photoconductor, a photo-diode or a phototransistor. Possible materials for these devices are amorphous Si, ZnS, CdSe, ZnSe, CdS et al.

Any of the prior art means for revision of information stored in a panel display can be added to any of the described panel displays in accordance with this invention.

Albeit this invention has been described with reference to a specific embodiment, this description is not meant to be construed in a limiting sense. Various modifications of the described embodiments, as well as other embodiments of this invention, will become apparent to persons skilled in the art upon reference to the description of the present invention. It is therefore contemplated that the appended claims will cover any such modifications or embodiments as fall within the true scope of this invention.

CLAIMS:

1. A panel display comprising a matrix of picture elements, each of which comprises image forming means (6) which changes the transmittance or reflectance thereof or the light intensity emitted thereby in response to application of electric voltage thereto, and which includes a transparent common electrode (7) and a display electrode (42), a plurality of address lines (32) and a plurality of data lines (31) for supplying input signals to each picture element; and characterised in that each picture element further comprises light sensing means (5) and in the provision of a plurality of address output lines (52) and a plurality of data output lines (51) operatively connected to the light sensing means of the matrix, for outputting element-identifying signals on receipt of light by a light sensing means (5).

2. A panel display according to claim 1, wherein each light sensing means (5) is a photoconductor.

3. A panel display according to claim 1, wherein each light sensing means (5) is a photo-diode.

4. A panel display according to claim 1, wherein each light sensing means (5) is a phototransistor.

5. A panel display according to any one of the preceding claims, wherein each image forming means is a liquid crystal display element (6).

6. A panel display according to any one of the preceding claims, wherein the light sensing means (5) are a plurality of devices produced on a bulk silicon layer (2).

7. A panel display according to any one of claims 1 to 5, wherein the light sensing means (54) are produced by employing the thin film transistor system.

8.          A panel display according to any one of claims 1 to 4, wherein the image forming means is an electroluminescent display element (Figures 8 and 9).

9.          A panel display according to any one of claims 1 to 4, wherein each image forming means is an electrochromic display element.

10.          A panel display according to any one of claims 1 to 4, wherein each image forming means is a plasma display element.

11.          A panel display according to any one of the preceding claims, further comprising means to remove an information element stored in a picture element and to supply another information element to that picture element.

FIG.1.

FIG.2.

FIG.3.

0109832

FIG.4.

FIG.5.

0109832

FIG.6.

0109832

FIG.7.

FIG.8.

39

91

7/8

92   9   91

52

51

38   52   55   8

51

0109832

FIG.9.